# EUROPÄISCHE PATENTSCHRIFT

(11) **EP 2 901 195 B1**
(45) Veröffentlichungstag und Bekanntmachung des Hinweises auf die Patenterteilung: **21.04.2021**
(21) Anmeldenummer: 13805832.6
(22) Anmeldetag: 09.12.2013
(51) Int. Cl.: G02B 6/44, H02G 3/18, H02G 15/013

(54) **KABELKONTAKTIERUNGSWITTERUNGSSCHUTZ**
CABLE CONTACT WEATHER PROTECTION DEVICE
DISPOSITIF DE PROTECTION CONTRE LES INTEMPÉRIES D'UNE MISE EN CONTACT ÉLECTRIQUE DE CÂBLE

(30) Priorität: 18.12.2012 DE 102012112510
(43) Veröffentlichungstag der Anmeldung: 05.08.2015
(60) Teilanmeldung: 15161164.7
(73) Patentinhaber: Reichle & De-Massari AG, 8620 Wetzikon (CH)
(72) Erfinder: BLASER, Mathias, 8055 Zürich (CH); WINTERHOFF, Hans, 79761 Walshut-Tiengen (DE); KEISER, Michael, 8610 Uster (CH)
(74) Vertreter: Daub, Thomas
(86) Internationale Anmeldenummer: PCT/EP2013/075969
(87) Internationale Veröffentlichungsnummer: WO 2014/095462

(56) Entgegenhaltungen:
- EP-A1- 0 841 734
- WO-A1-2010/034196
- WO-A2-02/097488
- WO-A2-2008/112118
- WO-A2-2010/141795
- DE-U1-202006 006 019
- DE-U1-202006 008 654
- US-A- 5 775 702
- US-A1- 2004 080 119
- US-A1- 2007 079 969
- US-A1- 2013 014 974

## Beschreibung

Die Erfindung betrifft einen Kabelkontaktierungswitterungsschutz nach Anspruch 1.

Es ist bereits vorgeschlagen worden, einen Kabelkontaktierungswitterungsschutz zur Aufnahme von Kabelkontaktierungsstellen von Glasfaserkabeln mit Dichtelementen zu versehen, um Kabeldurchführungsöffnungen abzudichten.

Beispielsweise ist aus der US 5 775 702 A ein Kabelkontaktierungswitterungsschutz mit einer Kabeldurchführungsdichteinheit bekannt, welche mehrere mit Scharnieren ausgestattete Dichtmodule zur Aufnahme von Kabeln aufweisen kann.

Die Patentanmeldungen WO 02/097488 A2, EP 0 841 734 A1 und WO 2010/034196 A1 offenbaren jeweils einen Kabelkontaktierungswitterungsschutz mit zumindest einer Kabeldurchführungsdichteinheit, die zumindest zwei separate, unabhängig voneinander austauschbare Dichtmodule aufweist, die jeweils dazu vorgesehen sind, in zumindest einem Anwendungszustand zumindest ein Kabel wenigstens abschnittsweise komplett in Umfangsrichtung zu umschließen.

Die WO 2008/112118 A2 offenbart einen als Kabelmuffe ausgebildeten Kabelkontaktierungswitterungsschutz, welcher eine Kabeldurchführungsdichteinheit aufweist. Die Kabeldurchführungsdichteinheit umfasst dabei mehrere Dichtmodule, welche jeweils ein Dichtelement und ein Schalungselement aufweisen und dazu vorgesehen sind, in zumindest einem Anwendungszustand zumindest ein Kabel wenigstens abschnittsweise komplett in Umfangsrichtung zu umschließen.

Aus der US 2004/0080119 A1 und der US 2013/0014974 A1 ist jeweils ein Kabelkontaktierungswitterungsschutz mit einer Kabeldurchführungsdichteinheit bekannt, welche mehrere Dichtmodule zur Aufnahme von Kabeln aufweist.

Das deutsche Gebrauchsmuster DE 20 2006 006 019 U1 offenbart einen Kabelkontaktierungswitterungsschutz mit einer Kabeldurchführungsdichteinheit, welche eine Mehrzahl von separaten, unabhängig voneinander austauschbaren, zylindersegmentartigen Dichtungskörpersegmenten aufweist.

Das deutsche Gebrauchsmuster DE 20 2006 008 654 U1 offenbart einen als Kabelmuffe ausgebildeten Kabelkontaktierungswitterungsschutz mit einem Dichtungskörper, umfassend zwei formstabile Endstücke und ein zwischen diesen Endstücken angeordnetes Gelelement.

Aus der US 2007/0079969 A1 ist eine Unterwasser-Abschlusseinrichtung für ein Bündel von Produktionsrohrleitungen bekannt.

Die WO 2010/141795 A2 offenbart ein Kontrollmodul für eine Unterwasser-Bohrlochausrüstung.

Die Aufgabe der Erfindung besteht insbesondere darin, einen Kabelkontaktierungswitterungsschutz mit verbesserten Eigenschaften hinsichtlich einer hohen Flexibilität, einer einfachen Wartung und/oder geringer Kosten bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung betrifft einen Kabelkontaktierungswitterungsschutz zur Aufnahme von Kabelkontaktierungsstellen, insbesondere von Glasfaserkabelkontaktierungsstellen, mit zumindest einer Kabeldurchführungsdichteinheit, die zumindest zwei, insbesondere zumindest vier, vorteilhaft zumindest sechs, vorzugsweise zumindest acht, separate, unabhängig voneinander austauschbare Dichtmodule aufweist, die jeweils dazu vorgesehen sind, in zumindest einem Anwendungszustand zumindest einen länglichen Körper wenigstens abschnittsweise in Längsrichtung und komplett in Umfangsrichtung zu umschließen. Unter einem "Kabelkontaktierungswitterungsschutz" soll insbesondere eine Vorrichtung verstanden werden, die dazu vorgesehen ist, eine Kontaktierungsanordnung zur Verbindung von Kabeln, insbesondere von Glasfaserkabeln, und/oder zur Halterung von Verbindungsstellen zwischen Kabeln, insbesondere Glasfaserkabeln, witterungsgeschützt aufzunehmen und/oder zu bilden. Insbesondere ist der Kabelkontaktierungswitterungsschutz dazu vorgesehen, in ungeschützten Umgebungen, insbesondere im Freien, im Boden, in Montageschächten, an Kabelmasten, und/oder vergleichbaren Orten eingesetzt zu werden. Insbesondere schützt der Kabelkontaktierungswitterungsschutz Kabelkontaktierungsstellen zumindest vor Feuchtigkeit, insbesondere bei einem Volllaufen eines Kabel- und/oder Montageschachts. Insbesondere weist der Kabelkontaktierungswitterungsschutz zumindest eine Ummantelungseinheit auf, die dazu vorgesehen ist, einen Hohlraum zu bilden, in dem die Kabelkontaktierungsstellen zumindest in einem montierten Zustand angeordnet sind. Unter "Kabelkontaktierungsstellen" sollen insbesondere technische Verbindungen, die insbesondere eine Signalübertragung erlauben, zwischen Leitungen eines Kabels und/oder zweier unterschiedlicher Kabel verstanden werden. Unter einer "Kabeldurchführungsdichteinheit" soll insbesondere eine Einheit verstanden werden, die dazu vorgesehen ist, Kabeldurchführungsbereiche der Ummantelungseinheit abzudichten. Insbesondere sind die Dichtmodule dazu vorgesehen, in Kabeldurchführungsbereichen der Ummantelungseinheit angeordnet zu werden. Insbesondere bilden die Dichtmodule jeweils zumindest einen, insbesondere zumindest drei, insbesondere zumindest sechs, insbesondere zumindest zehn, insbesondere zumindest sechzehn, Kabeldurchführungskanäle aus, die jeweils dazu vorgesehen sind, jeweils zumindest ein, vorzugsweise jeweils genau ein, längliches Objekt aufzunehmen und/oder in zumindest einem Anwendungszustand umfänglich dicht zu umschließen. Insbesondere weisen die Kabeldurchführungskanäle eine Länge auf, die zumindest so groß ist, insbesondere zumindest doppelt so groß ist, vorteilhaft zumindest dreimal so groß ist, wie ein Durchmesser des Kabeldurchführungskanals. Insbesondere weist der Kabeldurchführungskanal eine Länge von zumindest 2 cm, vorteilhaft zumindest 3,5 cm, vorzugsweise zumindest 5 cm, und/oder von maximal 10 cm, insbesondere maximal 8 cm, vorteilhaft maximal 6 cm, auf. Insbesondere weist die Kabeldurchführungsdichteinheit zumindest einen Dichtmodulträger auf, der dazu vorgesehen ist, in zumindest einem Anwendungszustand zumindest zwei, vorteilhaft zumindest einen Großteil, vorzugsweise jedes der Dichtmodule, zu tragen. Insbesondere weist die Kabeldurchführungsdichteinheit zumindest eine Dichtfläche auf, die in zumindest einem Anwendungszustand an einem Bauteil der Ummantelungseinheit anliegt. Unter einem "Dichtmodul" soll insbesondere eine Baueinheit verstanden werden, die gegen ein Dichtmodul gleicher oder anderer Bauart, insbesondere zur Anpassung an unterschiedliche Kabelkonfigurationen mit insbesondere unterschiedlichen Kabelanzahlen und/oder Kabeldurchmessern, ausgetauscht werden kann. Insbesondere sind die Dichtmodule werkzeuglos und/oder unter Zuhilfenahme einfachster Werkzeuge, insbesondere lediglich eines Schraubendrehers, lösbar und/oder verbindbar, insbesondere mit dem Dichtmodulträger, ausgebildet. Unter "separaten" Dichtmodulen sollen insbesondere Dichtmodule verstanden werden, die sich von Dichtmodulen, die gemeinsame Bauteile aufweisen, unterscheiden. Insbesondere weisen separate Dichtmodule keine gemeinsamen Bauteile auf. Insbesondere sind separate Dichtmodule unabhängig voneinander, insbesondere bezüglich des Dichtmodulträgers, lösbar und/oder verbindbar ausgestaltet. Insbesondere sind die Dichtmodule einzeln und unabhängig voneinander, insbesondere ohne eine Position weiterer Dichtmodule zu beeinflussen, bezüglich der Kabeldurchführungsdichteinheit lösbar, verbindbar und/oder austauschbar. Die Dichtmodule weisen jeweils zumindest ein Dichtelement und jeweils zumindest ein Schalungselement auf, das an dem jeweiligen Dichtelement anliegt. Insbesondere dient das Schalungselement einer Stabilisierung des Dichtelements. Insbesondere weist das Dichtmodul jeweils an Enden des Dichtmoduls, aus denen ein umfasster länglicher Körper, insbesondere ein Kabel, herausragt, ein Schalungselement auf. Sowohl das zumindest eine Dichtelement als auch das zumindest eine Schalungselement weisen zumindest ein Scharnier auf. Unter einem "länglichen Körper" soll insbesondere ein Köper verstanden werden, der eine Länge aufweist, die zumindest doppelt, vorteilhaft zumindest viermal, vorzugsweise zumindest achtmal, so groß ist wie dessen Durchmesser, der insbesondere quer zur Länge gemessen ist. Insbesondere sind Ausgestaltungen des länglichen Körpers als Rohr, insbesondere als Einblasrohr, als Kabel, insbesondere als Glasfaserkabel, und/oder als Blindstopfen denkbar. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung kann insbesondere eine einfache Wartung, eine Kostenersparnis, eine hohen Flexibilität und/oder eine verbesserte Dichtwirkung erreicht werden.

Weiterhin wird vorgeschlagen, dass der Kabelkontaktierungswitterungsschutz eine Druckbeaufschlagungseinheit aufweist, die dazu vorgesehen ist, die Dichtmodule in zumindest einer Richtung mit einem Druck zu beaufschlagen. Insbesondere ist die Druckbeaufschlagungseinheit dazu vorgesehen, die Dichtmodule in Richtungen mit Druck zu beaufschlagen, die zumindest im Wesentlichen parallel zu Kabeldurchführungskanälen der jeweiligen Dichtmodule liegen. Insbesondere ist die Druckbeaufschlagungseinheit zumindest teilweise mit einem Dichtmodulträger der Kabeldurchführungsdichteinheit einstückig ausgebildet. Insbesondere sind Teile des Dichtmodulträgers auch Teile der Druckbeaufschlagungseinheit. Es kann insbesondere eine verbesserte Dichtwirkung erreicht werden. Insbesondere kann eine Verformung des jeweiligen Dichtmoduls, insbesondere zumindest des jeweiligen Dichtelements, erreicht werden, die zu einer Einschnürung der von den Dichtmodulen bzw. deren Dichtelementen gebildeten Kabeldurchführungskanälen führt.

Ferner wird vorgeschlagen, dass die Druckbeaufschlagungseinheit für zumindest einen Großteil, insbesondere zumindest 30 %, vorteilhaft zumindest 45 %, besonders vorteilhaft zumindest 60 %, vorzugsweise jedes, der Dichtmodule der Kabeldurchführungsdichteinheit jeweils ein separates Druckbeaufschlagungsmodul aufweist. Insbesondere sind separate Druckbeaufschlagungsmodule dazu vorgesehen, jeweils ein einzelnes Dichtmodul mit einem Druck zu beaufschlagen. Insbesondere weisen die Druckbeaufschlagungsmodule eine gemeinsame Druckgrundlage auf. Insbesondere weisen die Druckbeaufschlagungsmodule jeweils einen Stellkörper auf, der dazu vorgesehen ist, den Druck aufzunehmen und an das jeweilige Dichtmodul weiterzugeben, wobei das Dichtmodul vorteilhaft zwischen der Druckgrundlage und dem Stellkörper angeordnet ist. Vorzugsweise sind die Stellkörper unterschiedlicher Druckbeaufschlagungsmodule gegeneinander beweglich gelagert. Insbesondere weisen die Druckbeaufschlagungsmodule jeweils eine eigene Spannkrafteinheit auf, die dazu vorgesehen ist, den Druck zur Beaufschlagung des jeweiligen Dichtmoduls zu halten und/oder zu erzeugen. Insbesondere beaufschlagen die Druckbeaufschlagungsmodule die Dichtmodule unabhängig voneinander mit, insbesondere unterschiedlichen, Drücken, die insbesondere abhängig sind von einer Kabelbelegung der Dichtmodule. Es kann insbesondere eine vereinfachte Konstruktion und/oder eine verbesserte Dichtwirkung erreicht werden. Insbesondere kann erreicht werden, dass Dichtmodule, die vergleichbare Kabeldurchführungskanäle aufweisen, jedoch von Kabeln mit unterschiedlichen Kabeldurchmessern belegt sind, unterschiedlich stark verformt werden, um jeweils eine gute Dichtwirkung zu erreichen. Alternativ ist es denkbar, dass die Dichtmodule mittels eines einzelnen Druckbeaufschlagungsmoduls beaufschlagt werden.

Weiterhin wird vorgeschlagen, dass die Druckbeaufschlagungseinheit zumindest eine, insbesondere genau eine, Druckeinstelleinheit aufweist, die dazu vorgesehen ist, für zumindest einen Großteil, insbesondere zumindest 25 %, vorteilhaft zumindest 50 %, besonders vorteilhaft zumindest 75 %, vorzugsweise jedes, der Druckbeaufschlagungsmodule gleichzeitig einen Druck einzustellen. Insbesondere weist die Druckeinstelleinheit zumindest ein Bedienmittel, insbesondere ein Schraubmittel, alternativ ein Hebelmittel, auf, das dazu vorgesehen ist, durch Lageänderung die Drücke einzustellen. Insbesondere weist die Druckeinstelleinheit zumindest einen Hauptstellkörper auf, der dazu vorgesehen ist, durch Lageänderung die Spannkrafteinheiten der Druckbeaufschlagungsmodule gleichzeitig vorzuspannen und so die auf die Dichtmodule wirkenden Drücke einzustellen, und der insbesondere durch Bedienung des Bedienmittels seine Lage ändert, wobei das Stellmittel insbesondere eine Summe der Spannkräfte der Spannkrafteinheiten der Druckbeaufschlagungsmodule aufnimmt. Insbesondere ist der Hauptstellkörper dazu vorgesehen, in zumindest einem Betriebszustand gegenüber zumindest einem anderen Teil der Druckeinstelleinheit um eine maximale Länge von zumindest 1 cm, insbesondere zumindest 2 cm, und/oder maximal 5 cm, insbesondere maximal 3 cm, verstellt zu werden. Es kann insbesondere eine einfache Handhabung erreicht werden. Insbesondere kann ein effizienter Dichtvorgang erreicht werden.

Ferner wird vorgeschlagen, dass zumindest zwei der Dichtmodule unterschiedlich ausgestaltet sind. Darunter, dass die Dichtmodule "unterschiedlich" ausgestaltet sind, soll insbesondere verstanden werden, dass die Dichtmodule unterschiedliche Anzahlen an Kabeldurchführungskanälen, unterschiedlich große Kabeldurchführungskanäle und/oder unterschiedliche Anordnungen von Kabeldurchführungskanälen aufweisen. Insbesondere weisen unterschiedliche Dichtmodule eine zumindest im Wesentlichen gleiche äußere Grundform auf. Insbesondere ist die Kabeldurchführungsdichteinheit dazu vorgesehen, an gleicher Position unterschiedliche Dichtmodule aufnehmen zu können. Es kann insbesondere eine hohe Flexibilität erreicht werden. Insbesondere kann der Kabelkontaktierungswitterungsschutz an unterschiedliche Kabelkonfigurationen flexibel angepasst werden.

Weiterhin wird vorgeschlagen, dass zumindest eines, insbesondere zumindest ein Großteil, vorzugsweise jedes, der Dichtmodule genau ein Dichtelement aufweist. Es kann insbesondere eine Bauteilersparnis und/oder eine einfache Montage erreicht werden. Alternativ ist es denkbar, dass zumindest ein Teil, insbesondere jedes, der Dichtmodule mehrere Dichtelemente aufweist.

Ferner wird vorgeschlagen, dass zumindest eines, insbesondere zumindest ein Großteil, vorzugsweise jedes, der Dichtmodule dazu vorgesehen ist, zu einer Kabelmontage, insbesondere einem Einlegen von Kabeln in Kabeldurchführungskanäle des Dichtmoduls aufgeklappt zu werden. Insbesondere sind dazu die Kabeldurchführungskanäle an zumindest einer Seite geschlitzt ausgestaltet. Insbesondere ist ein Scharnier der Dichtmodule, das das Aufklappen erlaubt, an einer Außenseite, die in zumindest einem Anwendungszustand der Ummantelungseinheit zugewandt ist, angeordnet. Insbesondere weist das zumindest eine Schalungselement einen Mechanismus, insbesondere einen Rast- und/oder Klemmmechanismus, auf, der dazu vorgesehen ist, ein ungewolltes Aufklappen des Dichtmoduls zu vermeiden. Vorteilhaft ist das Dichtelement zumindest im Wesentlichen entlang einer Umfangsrichtung geschlitzt. Unter einer Umfangsrichtung soll insbesondere eine Verlaufsrichtung verstanden werden, die zumindest im Wesentlichen parallel zu einem Verlauf einer nächsten Wandung der Ummantelungseinheit liegt. Insbesondere verläuft eine Schlitzung entlang einer Umfangsrichtung einerseits bis zu einer seitlichen Begrenzung des Dichtelements, die insbesondere zumindest im Wesentlichen senkrecht zu einem Verlauf einer nächsten Wandung der Ummantelungseinheit liegt, andererseits bis kurz vor eine Begrenzung des Dichtelements und biegt an dieser Stelle in Richtung der Außenseite ab, um ein Scharnier zu bilden. Insbesondere ist eine Schlitzung in das zumindest eine Schalungselement fortgesetzt. Es kann insbesondere eine einfache Montage erreicht werden.

Weiterhin wird vorgeschlagen, dass Dichtelemente der Dichtmodule als Gelelemente ausgebildet sind. Unter einem "Gelelement" soll insbesondere ein Element verstanden werden, dass eine weiche, aber zumindest unter geringer Last, formstabile Hülle aufweist, die von einem zähflüssigen zumindest gelartigen Material gefüllt ist. Insbesondere ist die Hülle und das Material darin von einem gleichen Material gebildet, wobei das zähflüssige, gelartige Material an die Hülle bildenden Grenzflächen durch einen chemischen und/oder physikalischen Prozess in einen festen Zustand übergeführt ist. Insbesondere sind die Dichtelemente von zumindest einem Polymer, insbesondere einem Blockcopolymer SEBS, und/oder einem thermoplastischen Polymer, beispielsweise Polyurethan, gebildet. Insbesondere kann eine hohe Kompressibilität und/oder eine hohe Dichtfähigkeit erreicht werden. Alternativ ist es beispielsweise denkbar, dass ein Dichtelement von einer gasgefüllten, vorzugsweise flexiblen, Hülle gebildet ist.

Vorteilhaft wird vorgeschlagen, dass zumindest eines, insbesondere zumindest ein Großteil, vorzugsweise jedes, der Dichtmodule zumindest im Wesentlichen als Kreisringsektor ausgebildet ist. Insbesondere komplettieren sich die Dichtmodule einer Kabeldurchführungsdichteinheit zu einem Kreisring. Insbesondere weisen die Dichtmodule zumindest in einer Aufsicht, insbesondere vom Hohlraums aus gesehen, einen kreisringsektorartigen Umriss auf. Insbesondere berühren sich die Dichtmodule, und insbesondere ihre jeweiligen Dichtelemente, seitlich. Alternativ ist es denkbar, dass zwischen den Dichtmodulen bzw. den Dichtelementen unterschiedlicher Dichtmodule Trennwandungen angeordnet sind. Es kann insbesondere eine einfache Konstruktion erreicht werden. Insbesondere kann eine platzsparende Anordnung erreicht werden.

Weiterhin wird vorgeschlagen, dass die Dichtmodule jeweils Rastmittel zu einer Rastmontage aufweisen. Insbesondere sind die Rastmittel an zumindest einem der Schalungselemente angeordnet. Insbesondere weist der Dichtmodulträger korrespondierende Rastmittel auf, die dazu vorgesehen sind, mit den Rastmitteln der Dichtmodule zu verrasten. Insbesondere ist es denkbar, dass der Dichtmodulträger und/oder die Dichtmodule, insbesondere die Schalungselemente, Führungsmittel, insbesondere Nuten und/oder Stege, aufweisen, die eine Montage der Dichtmodule vereinfachen und/oder einen Halt der Dichtmodule verbessern. Es kann insbesondere eine einfach herzustellende, einfach zu lösende, einfach zu wartende und/oder stabile Verbindung erreicht werden.

Ferner wird vorgeschlagen, dass der Kabelkontaktierungswitterungsschutz eine Kabelfixiereinheit aufweist, die zumindest zwei, insbesondere zumindest vier, vorteilhaft zumindest sechs, vorzugsweise zumindest acht, separate Kabelfixiermodule aufweist, die jeweils dazu vorgesehen sind, in zumindest einem Anwendungszustand zumindest einen länglichen Körper zu fixieren. Insbesondere ist jeweils eines der Kabelfixiermodule einem der Dichtmodule zugeordnet, wobei die einander zugeordneten Kabelfixiermodule und Dichtmodule in einem gemeinsamen Kabeldurchführungsbereich angeordnet sind. Insbesondere sind die einander zugeordneten Kabelfixiermodule äquivalent bezüglich Anzahl und/oder Größe einzulegender Kabel ausgebildet. Unter einem "Kabelfixiermodul" soll insbesondere eine Baueinheit verstanden werden, die gegen ein Kabelfixiermodul gleicher oder anderer Bauart ausgetauscht werden kann. Unter "separaten" Kabelfixiermodulen sollen insbesondere Kabelfixiermodule verstanden werden, die keine gemeinsamen Bauteile aufweisen. Insbesondere weisen die Kabelfixiermodule jeweils zumindest eine erste Klemmeinheit zur Klemmung des länglichen Körpers auf. Vorzugsweise weisen die Kabelfixiermodule zumindest eine zweite Klemmeinheit zur Klemmung eines Kabelbestandteils des länglichen Körpers oder eines Kabelbestandteils eines durch den länglichen Körper geführten Kabels auf, insbesondere einer Kabelschirmung, vorzugsweise einer Kabelstabilisierung. Es kann insbesondere eine Zugentlastung eingelegter Kabel erreicht werden, was insbesondere eine Kabelkontaktierung vereinfachen kann.

Vorteilhaft wird vorgeschlagen, dass zumindest eines der Kabelfixiermodule ein Führungselement aufweist, das einen minimalen Biegeradius für Leitungen eingelegter Kabel festlegt. Insbesondere erstreckt sich das Führungselement zungenartig von einer, insbesondere der ersten, Klemmeinheit. Insbesondere weist das Führungselement Fixiermittel auf, die eine Fixierung von Leitungen eingelegter Kabel an dem Führungselement erlauben. Es kann insbesondere eine sichere Montage erreicht werden. Insbesondere können Montagefehler vermieden werden.

Weiterhin wird vorgeschlagen, dass die Kabelfixiereinheit eine Lagerungseinheit aufweist, die dazu vorgesehen ist, die Kabelfixiermodule beweglich zu lagern. Insbesondere ist die Lagerungseinheit zu einer Rastmontage vorgesehen. Insbesondere weist die Lagerungseinheit Führungsmittel, insbesondere Führungsstifte, auf. Insbesondere weist das Kabelfixiermodul Führungsmittel, insbesondere eine Führungsplatte, auf, die dazu vorgesehen sind, das Kabelfixiermodul an den Führungsmitteln der Lagerungseinheit zu führen. Insbesondere weist das Kabelfixiermodul zumindest ein Führungsmittel, insbesondere eine Nut, auf, das dazu vorgesehen ist, mit einem Führungsmittel, insbesondere einer Plattenkante, der Lagerungseinheit zusammenzuwirken, um eine formschlüssige Führung des Kabelfixiermoduls zu erreichen. Insbesondere weist das Kabelfixiermodul zumindest ein Bewegungsbegrenzungsmittel, insbesondere ein Rastmittel, auf, das dazu vorgesehen ist, einen Bewegungsspielraum des Kabelfixiermoduls zu begrenzen.

Weiterhin wird ein System zur Zusammenstellung eines erfindungsgemäßen Kabelkontaktierungswitterungsschutzes vorgeschlagen. Vorteilhaft weist dieses System zumindest zwei, insbesondere zumindest drei, vorteilhaft zumindest vier, unterschiedliche Dichtmodule auf, die dazu vorgesehen sind, zu einer Kabeldurchführungsdichteinheit des Kabelkontaktierungswitterungsschutzes kombiniert zu werden, und/oder das System weist zumindest zwei, vorteilhaft zumindest drei, vorzugsweise zumindest vier, unterschiedliche Kabelfixiermodule auf, die dazu vorgesehen sind, zu einer Kabelfixiereinheit zusammengesetzt zu werden. Vorteilhaft weist das System zu jedem der Kabelfixiermodule ein funktionell zugeordnetes Dichtmodul auf. Es kann insbesondere eine hohe Flexibilität erreicht werden.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen erfindungsgemäßen Kabelkontaktierungswitterungsschutz in einer Außenansicht in geschlossenem Zustand,
- Fig. 2: eine partielle Schnittansicht durch eine erfindungsgemäße Kabelkontaktierungsvorrichtung,
- Fig. 3: eine perspektivische Ansicht einer teilweise zerlegten Kabeldurchführungsdichteinheit,
- Fig. 4: ein erstes erfindungsgemäßes Dichtelement eines ersten erfindungsgemäßen Dichtmoduls in aufgeklapptem Zustand in einer Ansicht von oben,
- Fig. 5: ein zweites erfindungsgemäßes Dichtmodul in einer perspektivischen Ansicht,
- Fig. 6: ein Dichtelement des zweiten erfindungsgemäßen Dichtmoduls in einer Ansicht von unten,
- Fig. 7: das Dichtelement des ersten erfindungsgemäßen Dichtmoduls in einer Ansicht von oben,
- Fig. 8: ein Dichtelement eines dritten erfindungsgemäßen Dichtmoduls in einer Ansicht von oben,
- Fig. 9: den Kabelkontaktierungswitterungsschutz und dessen Kabelfixereinheit in einer Ansicht von schräg oben ohne Ummantelungseinheit,
- Fig. 10: ein erstes Kabelfixiermodul in zerlegter Darstellung mit eingelegtem Kabel,
- Fig. 11: das erste Kabelfixiermodul in verbundenem Zustand,
- Fig. 12: ein zweites Kabelfixiermodul in zerlegtem Zustand und
- Fig. 13: ein drittes Kabelfixiermodul in zerlegtem Zustand.

### Beschreibung des Ausführungsbeispiels

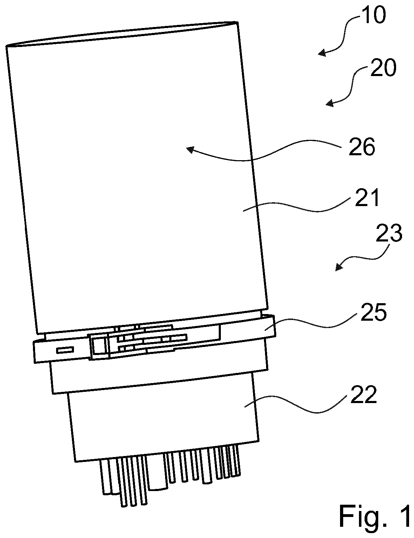

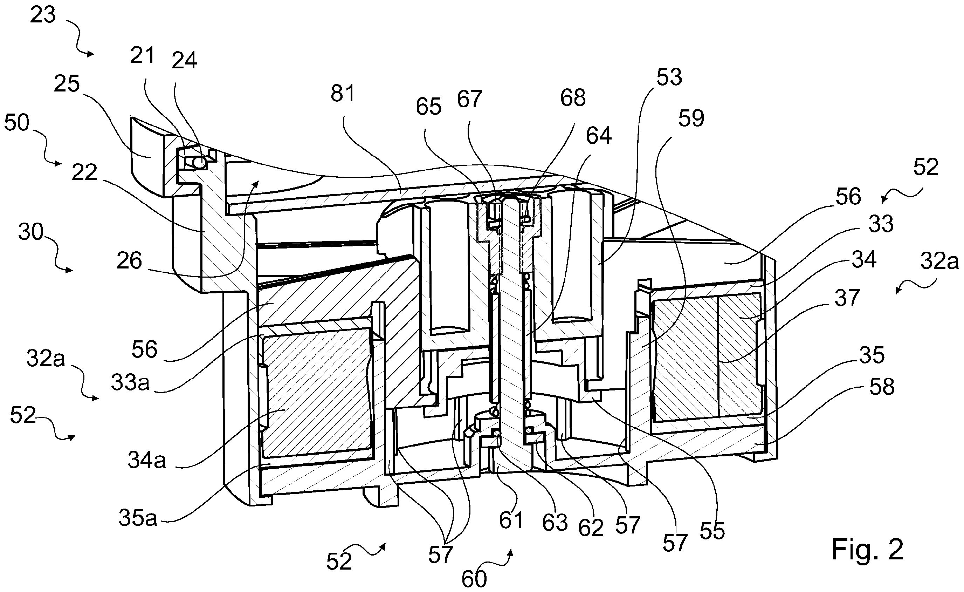

Figur 1 zeigt einen Kabelkontaktierungswitterungsschutz 10 zur Aufnahme von Glasfaserkabelkontaktierungsstellen (auf eine Darstellung einzelner Leitungen von Kabeln und eine Bezeichnung der in den Kabelkontaktierungswitterungsschutz 10 geführten Kabel wird in den Figuren bis auf wenige Ausnahmen verzichtet, um eine angemessene Übersichtlichkeit zu wahren). Der Kabelkontaktierungswitterungsschutz 10 weist eine Ummantelungseinheit 20 auf. Die Ummantelungseinheit 20 weist ein im Wesentlichen zylindrisches Deckteil 21 und ein abgestuft zylindrisches Grundteil 22 auf. Das Deckteil 21 weist eine einzelne Öffnung auf. Das Grundteil 22 weist eine obere und eine untere Öffnung auf. Die Ummantelungseinheit 20 weist weiterhin eine Dichteinheit 23 auf, die von einem Dichtring 24 und einem Spannring 25 gebildet ist (Figur 2). Die Dichteinheit 23 ist dazu vorgesehen, Deckteil 21 und Grundteil 22 mittels des Spannrings 25 miteinander zu verbinden, wobei die Öffnung des Deckteils 21 und eine obere Öffnung des Grundteils 22 aufeinander liegen. Der Dichtring 24 ist zwischen dem Deckteil 21 und dem Grundteil 22 angeordnet. Der Dichtring 24 umrundet die Öffnung des Deckteils 21 und die obere Öffnung des Grundteils 22. Der Dichtring 24 dichtet einen Spalt zwischen dem Deckteil 21 und dem Grundteil 22 ab. Die Ummantelungseinheit 20 bildet einen Hohlraum 26. In dem Hohlraum 26 verbundene Kabel sind durch die untere Öffnung des Grundteils 22 geführt.

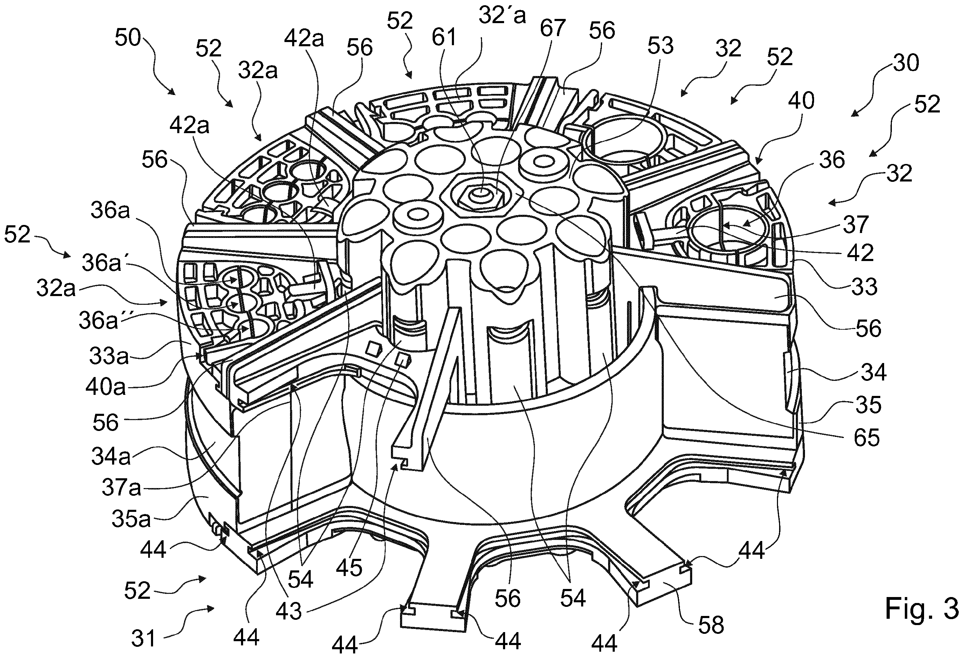

Der Kabelkontaktierungswitterungsschutz 10 weist eine Kabeldurchführungsdichteinheit 30 auf, die in einem von dem Grundteil 22 umfassten Raum angeordnet ist. Die Kabeldurchführungsdichteinheit 30 weist acht separate, unabhängig voneinander austauschbare Dichtmodule 32, 32a auf (Figur 3, auf eine doppelte Bezeichnung von sich wiederholenden Bestandteilen wurde im Wesentlichen verzichtet, um eine bessere Übersichtlichkeit zu wahren. Ferner sind in Figur 3 nicht alle Dichtmodule 32, 32a dargestellt.). Die Dichtmodule 32, 32a sind in einen Dichtmodulträger 31 eingesetzt. Die Kabeldurchführungsdichteinheit 30 weist vier erste Dichtmodule 32 und vier zweite Dichtmodule 32a auf. Die ersten und zweiten Dichtmodule 32, 32a sind unterschiedlich ausgestaltet. Die ersten Dichtmodule 32 sind in einem Anwendungszustand dazu vorgesehen, jeweils einen länglichen Körper mit mittlerem bis großen Durchmesser aufzunehmen und abschnittsweise komplett in Umfangsrichtung zu umschließen. Die ersten Dichtmodule 32 weisen dazu jeweils einen Kabeldurchführungskanal 36 auf. Die zweiten Dichtmodule 32a sind in einem Anwendungszustand dazu vorgesehen, jeweils drei längliche Körper kleinen bis mittleren Durchmessers aufzunehmen und abschnittsweise komplett in Umfangsrichtung zu umschließen. Die zweiten Dichtmodule 32a weisen dazu jeweils drei Kabeldurchführungskanäle 36a, 36a', 36a" auf. Die Dichtmodule 32, 32a weisen jeweils genau ein Dichtelement 34, 34a und jeweils zwei Schalungselemente 33, 35, 33a, 35a auf, die an dem Dichtelement 34, 34a anliegen. Die Schalungselemente 33, 35, 33a, 35a sind jeweils an einer dem Hohlraum 26 zugewandten Seite und einer von dem Hohlraum 26 abgewandten Seite an dem jeweiligen Dichtelement 34, 34a angeordnet. Die Schalungselemente 33, 35, 33a, 35a sind von einem festen Kunststoff, beispielsweise Polyethylen, gebildet.

Die Dichtelemente 34, 34a sind jeweils als Gelelemente ausgebildet. Die Dichtmodule 32, 32a sind im Wesentlichen als Kreisringsektoren ausgebildet. Die Dichtmodule 32, 32a erstrecken sich jeweils über einen Winkel von 45°. Die Dichtmodule 32, 32a ergänzen sich, eingebaut in den Dichtmodulträger 31, zu einem kompletten Kreisring. Die Schalungselemente 33, 35, 33a, 35a bedecken in einem eingebauten Zustand jeweils eine dem Hohlraum 26 zugewandte und eine von dem Hohlraum 26 abgewandte Seite der Dichtelemente 34, 34a. Weiterhin bedecken die Schalungselemente 33, 35, 33a, 35a jeweils ausgehend von den bedeckten Seiten einen Streifen einer Außenseite des Dichtelements 34, 34a, die in einem eingebauten Zustand der Ummantelungseinheit 20 zugewandt ist und einen Streifen einer Innenseite des Dichtelements 34, 34a, die von der Ummantelungseinheit 20 abgewandt ist. Die Streifen der Schalungselemente 33, 35, 33a, 35a bedecken hierbei jeweils einen Teil, insbesondere ca. 20 %, der Außen- bzw. Innenseite des Dichtelements 34, 34a. An der Außenseite des Dichtelements 34, 34a ist ein unbedeckter Bereich des Dichtelements 34, 34a jeweils um wenige Millimeter parallelversetzt nach innen eingerückt. An der Innenseite des Dichtelements 34, 34a ist ein unbedeckter Bereich des Dichtelements 34, 34a leicht keulenförmig zum Dichtelement 34, 34a hin eingerückt. Sektorgrenzseiten der Dichtelemente 34, 34a, die im Wesentlichen senkrecht zur Innen- und Außenseite orientiert sind, sind frei von einer Bedeckung durch die Schalungselemente 33, 35, 33a, 35a. Sektorgrenzseiten der Dichtelemente 34, 34a liegen in einem montierten Zustand an Sektorgrenzseiten anderer Dichtelemente 34, 34a an.

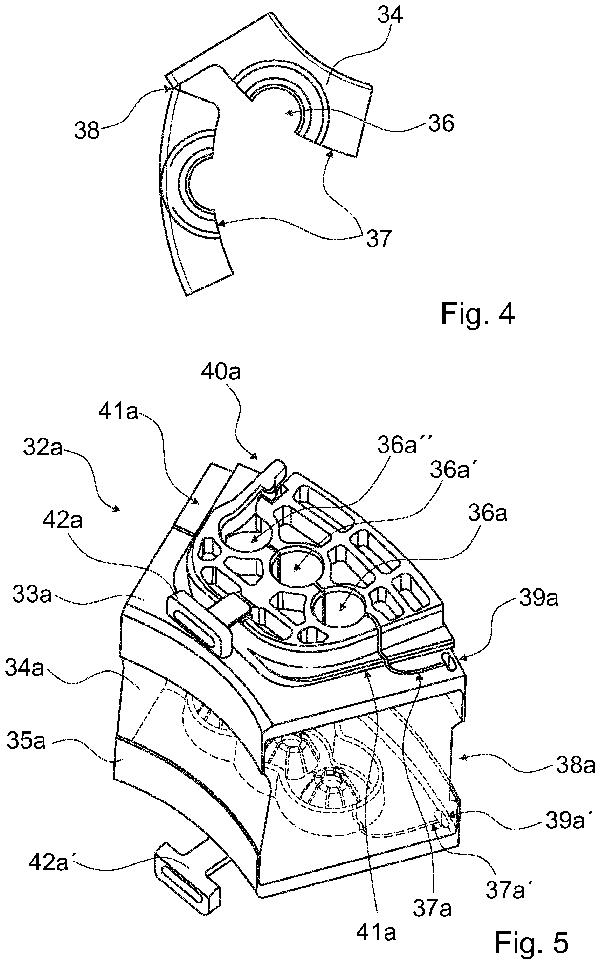

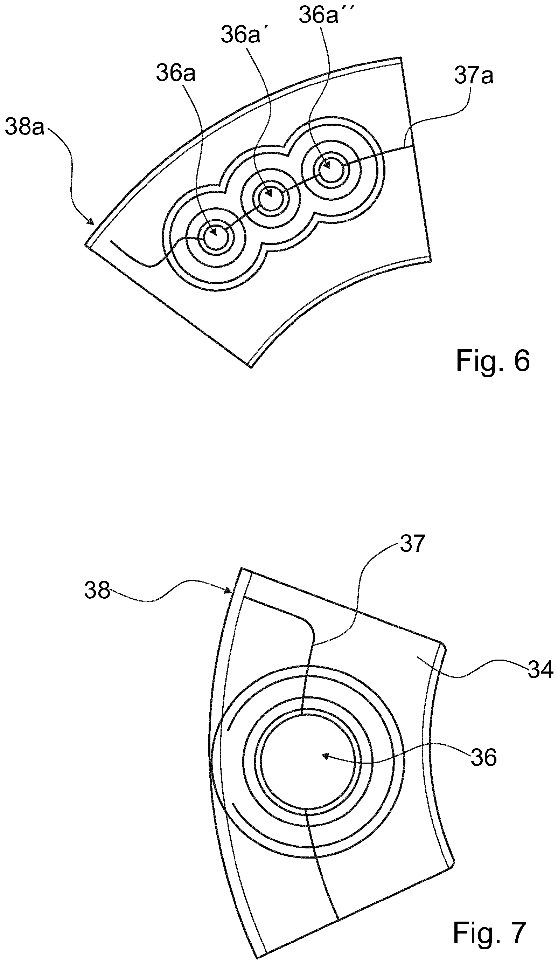

Die Dichtmodule 32, 32a sind dazu vorgesehen, zu einer Kabelmontage aufgeklappt zu werden (Figur 4). Die Dichtelemente 34, 34a und die Schalungselemente 33, 35, 33a, 35a sind dazu teilweise entlang einer Umfangsrichtung geschlitzt (Figuren 5 bis 8). Ein Schlitz 37, 37a durch Dichtelement 34, 34a und Schalungselemente 33, 35, 33a, 35a geht hierbei von einer ersten Sektorgrenzseite aus, schneidet Kabeldurchführungskanäle 36, 36a, 36a', 36a" jeweils etwa mittig und setzt sich nahe der zweiten Sektorgrenzseite in Richtung Außenseite fort. Der Schlitz 37, 37a endet hierbei jeweils kurz vor Erreichen der Außenseite. An der Stelle, an der der Schlitz 37, 37a die Außenseite des Dichtelements 34, 34a fast erreicht, bildet sich ein Scharnier 38, 38a heraus, das ein Aufklappen des Dichtelements 34, 34a erlaubt. Die Schalungselemente 33, 35, 33a, 35a weisen jeweils an vergleichbarer Stelle ein als Filmscharnier ausgebildetes Scharnier 39a, 39a' auf. Die Scharniere 38, 38a, 39a, 39a' der Schalungselemente 33, 35, 33a, 35a und des Dichtelements 34, 34a liegen in einer Achse. Die Schalungselemente 33, 35, 33a, 35a weisen jeweils an einer von dem Scharnier 39a, 39a' abgewandten Seite einen Rastmechanismus 40a auf, der dazu dient, ein ungewolltes Aufklappen des Dichtmoduls 32, 32a zu vermeiden.

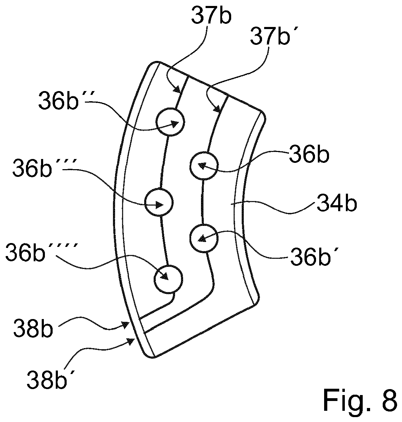

Es sind weitere Ausgestaltungen von Dichtmodulen, insbesondere mit unterschiedlich großen Kabeldurchführungskanälen und/oder unterschiedlich vielen Kabeldurchführungskanälen denkbar. In Figur 8 ist beispielhaft ein Dichtelement 34b eines dritten Dichtmoduls gezeigt. Das Dichtelement 34b weist fünf Kabeldurchführungskanäle 36b, 36b', 36b", 36b''', 36b'''' auf. Die Kabeldurchführungskanäle 36b, 36b', 36b", 36b''', 36b'''' sind in zwei Reihen angeordnet, wobei ein erster Schlitz 37b drei der Kabeldurchführungskanäle 36b", 36b''', 36b'''' und ein zweiter Schlitz 37b' zwei der Kabeldurchführungskanäle 36b, 36b' schneidet. Es sind weitere Ausgestaltungen mit beispielsweise zwei, vier, sechs, sieben oder mehr, insbesondere bis zu sechszehn, Kabeldurchführungskanälen und/oder gar mit drei oder vier Reihen und entsprechender Anzahl an, insbesondere in Umfangsrichtung verlaufenden, Schlitzen denkbar.

Weiterhin weist der Kabelkontaktierungswitterungsschutz 10 eine Druckbeaufschlagungseinheit 50 auf, die dazu vorgesehen ist, die Dichtmodule 32, 32a in einer Richtung parallel zu den Kabeldurchführungskanälen 36, 36a, 36a', 36a" mit einem Druck zu beaufschlagen (Figur 3). Die Druckbeaufschlagungseinheit 50 weist für jedes der Dichtmodule 32, 32a der Kabeldurchführungsdichteinheit 30 jeweils ein separates Druckbeaufschlagungsmodul 52 auf. Jedes der Druckbeaufschlagungsmodule 52 weist eine eigene Spannkrafteinheit 54 und einen eigenen Stellkörper 56 auf. Die Spannkrafteinheit 54 ist jeweils von einer insbesondere langzylindrischen Spiralfederkomponente gebildet. Die Druckbeaufschlagungsmodule 52 weisen eine gemeinsame Druckgrundlage 58 auf.

Der Dichtmodulträger 31 ist von den Stellkörpern 56 und der gemeinsamen Druckgrundlage 58 gebildet. Die Dichtmodule 32, 32a bilden an einer von dem Dichtelement 34, 34a abgewandten Seite der Schalungselemente 33, 35, 33a, 35a jeweils als Führungsnuten und Führungsstege ausgebildete Führungsmittel 41a aus. Die Stellkörper 56 weisen jeweils als Führungsstege und Führungsnuten ausgebildete Führungsmittel 43 auf, die dazu vorgesehen sind, mit den Führungsmitteln 41a des dem Hohlraum 26 zugewandten Schalungselements 33, 33a einen Formschluss einzugehen. Die gemeinsame Druckgrundlage 58 weist als Führungsstege und Führungsnuten ausgebildete Führungsmittel 44 auf, die dazu vorgesehen sind, mit den Führungsmitteln 41a des vom Hohlraum 26 abgewandten Schalungselement 35, 35a einen Formschluss einzugehen. Weiterhin weisen die Dichtmodule 32, 32a jeweils zwei als T-Haken ausgebildete Rastmittel 42, 42a, 42a' auf. Die Rastmittel 42, 42a, 42a' sind jeweils an einer Innenseite, über die jeweiligen Schalungselemente 33, 35, 33a, 35a überstehend, an diesen ausgeformt angeordnet. Die Stellkörper 56 und die Druckgrundlage 58 weisen jeweils an einem inneren Ende von Ausnehmungen, als Rampen ausgebildete Rastmittel 45 auf, hinter denen die Rastmittel 42, 42a, 42a' der Dichtmodule 32, 32a bei einer Montage einrasten. Die Rastmittel 45 der Stellkörper 56 sind jeweils dem Hohlraum 26 zugewandt. Die Rastmittel 45 der Druckgrundlage 58 sind jeweils vom Hohlraum 26 abgewandt. Zwischen den Ausnehmungen der Stellkörper 56 und der jeweiligen Ausnehmung der Druckgrundlage 58 ist jeweils ein Kabeldurchführungsbereich ausgebildet, in dem in einem montierten Zustand ein Dichtmodul 32, 32a eingesetzt ist. Die Rastmittel 42, 42a, 42a' der Dichtmodule 32, 32a weisen jeweils eine Hilfslasche auf, die ein Lösen der Rastverbindung, beispielsweise per Schraubendreherspitze, ermöglicht.

Unterschiedliche Dichtmodule 32, 32a weisen jeweils eine gleiche Grundform auf, so dass die Führungsmittel 41a und die Rastmittel 42, 42a, 42a' jeweils an äquivalenten Positionen angeordnet sind, wodurch der Dichtmodulträger 31 standardisierte Aufnahmen aufweist, was zu einer vereinfachten und flexiblen Montage und austauschbaren Dichtmodulen 32, 32a führt.

Die Druckbeaufschlagungseinheit 50 weist eine Druckeinstelleinheit 51 auf, die dazu vorgesehen ist, für alle Druckbeaufschlagungsmodule 52 gleichzeitig einen Druck einzustellen. Die Druckeinstelleinheit 51 weist einen Hauptstellkörper 53 auf. Die Spannkrafteinheiten 54 der jeweiligen Druckbeaufschlagungsmodule 52 sind jeweils zwischen den Hauptstellkörper 53 und den jeweiligen Stellkörper 56 gespannt. Die Druckeinstelleinheit 51 weist weiterhin einen Abstandhalter 55 auf, der fest mit dem Hauptstellkörper 53 verbunden ist und der gemeinsam mit dem Hauptstellkörper 53 eine minimale und eine maximale Verstellstrecke der Stellkörper 56 gegen den Hauptstellkörper 53 festlegen. Der Hauptstellkörper 53 und der Abstandhalter 55 bilden eine Vertiefung aus, in die jeweils eine Ausformung des Stellkörpers 56 eingreift und entlang der die Ausformung in ihrer Bewegungsfreiheit begrenzt ist. Der Hauptstellkörper 53 weist Anschlagkanten auf, die dazu vorgesehen sind, einen Bewegungsspielraum der Stellkörper 56, insbesondere in Richtung des Hohlraums 26, zu begrenzen. Der Abstandhalter 55 weist Anschlagkanten auf, die dazu vorgesehen sind, einen Bewegungsspielraum der Stellkörper 56, insbesondere in Richtung weg vom Hohlraum 26, zu begrenzen. Auf diese Weise kann eine sichere Entlastung der Dichtmodule 32, 32a einerseits in zumindest einem Zustand, eine ungefederte Direktbelastung andererseits in zumindest einem weiteren Zustand erreicht werden und eine gefederte Belastung in Zwischenzuständen erreicht werden. Die Druckgrundlage 58 ist im Wesentlichen plattenartig mit aufgesetzem Hohlzylinder 59 ausgebildet. Der Hohlzylinder 59 weist einen Außendurchmesser auf, der etwa einer Hälfte eines Durchmessers der Druckgrundlage 58 entspricht. Die Dichtmodule 32, 32a liegen in einem montierten Zustand mit ihrer Innenseite an einer Außenseite des Hohlzylinders 59 an. An seiner Innenseite weist der Hohlzylinder 59 in Längsrichtung des Hohlzylinders 59 Führungsstege 57 auf, die die Stellkörper 56 in ihrer Hubbewegung führen. Weiterhin sind die Stellkörper 56 zwischen der Innenwand des Hohlzylinders 59 und einer Außenwand des Hauptstellkörpers 53 geführt. Durch die Druckbeaufschlagung werden die Dichtmodule 32, 32a zusammengedrückt und zumindest in einem mittleren Bereich verformt. Die Dichtelemente 34, 34a werden zwischen den Schalungselementen 33, 35, 33a, 35a zusammengedrückt. Eine Außenseite des Dichtelements 34, 34a wird dabei nach außen gegen die Ummantelungseinheit 20 gedrückt. Eine Innenseite des Dichtelements 34, 34a wird nach innen gegen eine Wandung des Hohlzylinders 59 der Druckgrundlage 58 gedrückt. Wandungen des von dem Dichtelement 34, 34a gebildeten Kabeldurchführungskanals 36, 36a, 36a', 36a" werden aufeinander zu gedrückt, wobei ein Durchmesser des Kabeldurchführungskanals 36, 36a, 36a', 36a" auf bis zu 50 % oder gar bis zu 30 % seines ursprünglichen Durchmessers komprimiert wird. Die Kabeldurchführungsdichteinheit 30 dichtet in einem Anwendungszustand die Ummantelungseinheit 20 gegen die Druckgrundlage 58 ab.

Weiterhin weist die Druckeinstelleinheit 51 eine Bedieneinheit 60 auf. Die Bedieneinheit 60 ist dazu vorgesehen, einen Abstand zwischen der Druckgrundlage 58 und dem Hauptstellkörper 53 einzustellen. Die Bedieneinheit 60 weist ein als Langschraube ausgebildetes Bedienmittel 61 auf. Das Bedienmittel 61 ist durch ein vertieft angeordnetes Loch in der Druckgrundlage 58 geführt und mit einer Unterlegscheibe 62 zu der Druckgrundlage 58 beabstandet. Ein Kopf des Bedienmittels 61 ist in der zu dem Loch führenden Vertiefung angeordnet, was zusätzlich ein ungewolltes Entspannen vermeiden kann. Zwischen der Unterlegscheibe 62 und der Druckgrundlage 58 ist, in einer weiteren Vertiefung der Druckgrundlage 58 anliegend an dem Bedienmittel 61, ein Dichtring 63 angeordnet, der das Loch in der Druckgrundlage 58 abdichtet. Weiterhin weist die Bedieneinheit 60 eine Federeinheit 64 auf, die dazu dient, das Bedienmittel 61 unter Spannung zu halten, damit ein Abheben der Druckbeaufschlagungseinheit 50 von den Dichtmodulen 32, 32a sichergestellt werden kann. Das Bedienmittel 61 endet in einem Gewinde 65, das in dem Hauptstellkörper 53 angeordnet, beispielsweise in diesen eingepresst, ist. Weiterhin weist die Bedieneinheit 60 ein von einer Mutter gebildetes Abschlusselement 67 auf, das dazu vorgesehen ist, ein Herausdrehen des Bedienmittels 61 aus dem Gewinde 65 zu vermeiden. Das Abschlusselement 67 ist in einem entspannten Zustand der Druckbeaufschlagungseinheit 50 mittels eines Federrings 68 gegen das Gewinde 65 bzw. den Hauptstellkörper 53 abgespannt.

Alternativ ist es denkbar, dass eine erfindungsgemäße Druckbeaufschlagungseinheit eine Druckeinstelleinheit aufweist, die werkzeuglos bedient werden kann. Insbesondere wird dabei auf eine Versenkung eines Kopfs des Bedienmittels verzichtet. Insbesondere weist das Bedienmittel einen Handknebel auf.

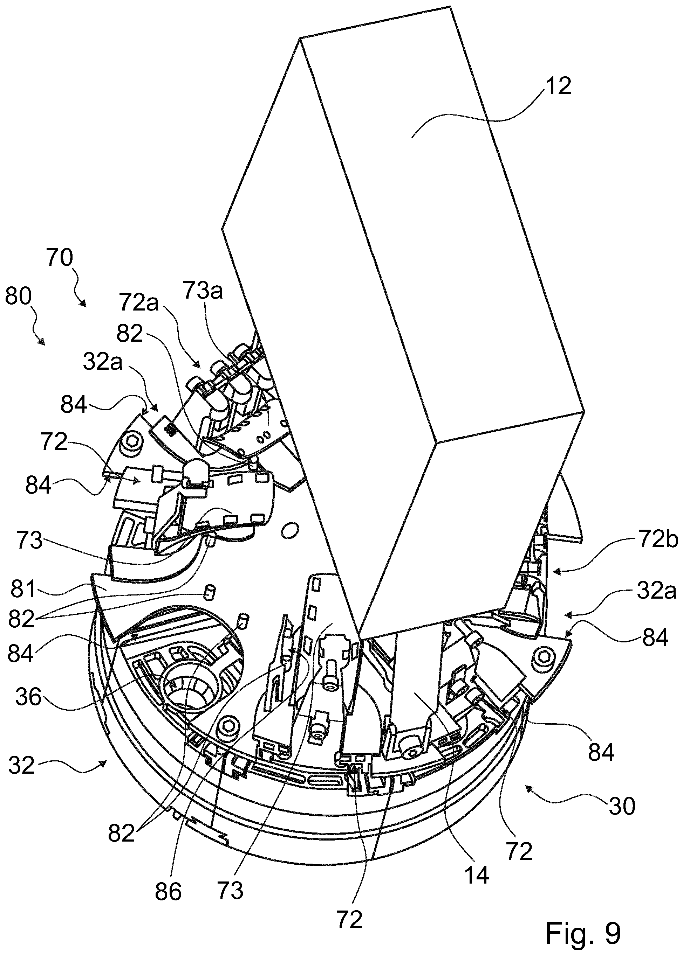

Weiterhin weist der Kabelkontaktierungswitterungsschutz 10 eine Kabelfixiereinheit 70 auf, die acht separate Kabelfixiermodule 72, 72a, 72b aufweist, die jeweils dazu vorgesehen sind, in zumindest einem Anwendungszustand zumindest einen länglichen Körper zu fixieren (Figur 9). Die Kabelfixiereinheit 70 weist vier erste Kabelfixiermodule 72 auf (eine ist zwecks Anschaulichkeit der Anordnung entnommen). Weiterhin weist die Kabelfixiereinheit 70 drei zweite Kabelfixiermodule 72a auf (zwei von diesen sind verdeckt). Ferner weist die Kabelfixiereinheit 70 ein drittes Kabelfixiermodul 72b auf. Die vier ersten Kabelfixiermodule 72 sind jeweils dazu vorgesehen, ein einzelnes Kabel mit mittlerem bis großem Durchmesser zu fixieren. Den ersten Kabelfixiermodulen 72 ist jeweils korrespondierend angeordnet eines der ersten Dichtmodule 32 zugeordnet. Die drei zweiten Kabelfixiermodule 72a sind jeweils dazu vorgesehen, drei Kabel mit kleinem bis mittlerem Durchmesser zu fixieren. Den zweiten Kabelfixiermodulen 72a ist jeweils korrespondierend angeordnet eines der zweiten Dichtmodule 32a zugeordnet. Das dritte Kabelfixiermodule 72b ist dazu vorgesehen, drei Einblasröhren zur nachträglichen Kabelverlegung zu fixieren. Dem dritten Kabelfixiermodul 72b ist eines der zweiten Dichtmodule 32a zugeordnet. Die Kabelfixiermodule 72, 72a, 72b weisen jeweils ein Führungselement 73, 73a, 73b, 73b', 73b" auf, das einen minimalen Biegeradius für Leitungen eingelegter Kabel festlegt. Die Führungselemente 73, 73a, 73b, 73b', 73b" legen einen minimalen Biegeradius jeweils auf ca. 4 cm fest und verhindern insbesondere ein Abknicken der Leitungen. Die Führungselemente 73, 73a, 73b, 73b', 73b" weisen jeweils Löcher auf, die dazu dienen, Leitungen eingelegter Kabel mittels Kabelbinder an dem Führungselement 73, 73a, 73b, 73b', 73b" zu fixieren.

Die Kabelfixiereinheit 70 weist eine Lagerungseinheit 80 auf, die dazu vorgesehen ist, die Kabelfixiermodule72, 72a 72b beweglich zu lagern. Die Lagerungseinheit 80 weist eine Grundplatte 81 auf. Die Grundplatte 81 ist fest mit dem Hauptstellkörper 53 verbunden, hier verschraubt. Die Lagerungseinheit 80 weist weiterhin als Führungsstifte ausgebildete Führungsmittel 82 auf. Ferner weist die Lagerungseinheit 80 als Randkanten ausgebildete Führungsmittel 84 auf, die an Ausnehmungen zur Aufnahme der Kabelfixiermodule 72, 72a, 72b angeordnet sind. Die Ausnehmungen zur Aufnahme der Kabelfixiermodule 72, 72a, 72b sind hierbei gleichförmig ausgebildet, um eine beliebige Montage der Kabelfixiermodule 72, 72a, 72b zu ermöglichen.

Die Grundplatte 81 ist weiterhin mit dem Grundteil 22 verschraubt. An der Grundplatte 81 ist eine Verbindungsanordnung 12 zur Lagerung von Kabelverbindungsstellen zwischen Leitungen eingelegter Kabel befestigt. Die Verbindungsanordnung 12 ist mittels eines Brückenträgers 14 von der Grundplatte 81 beabstandet.

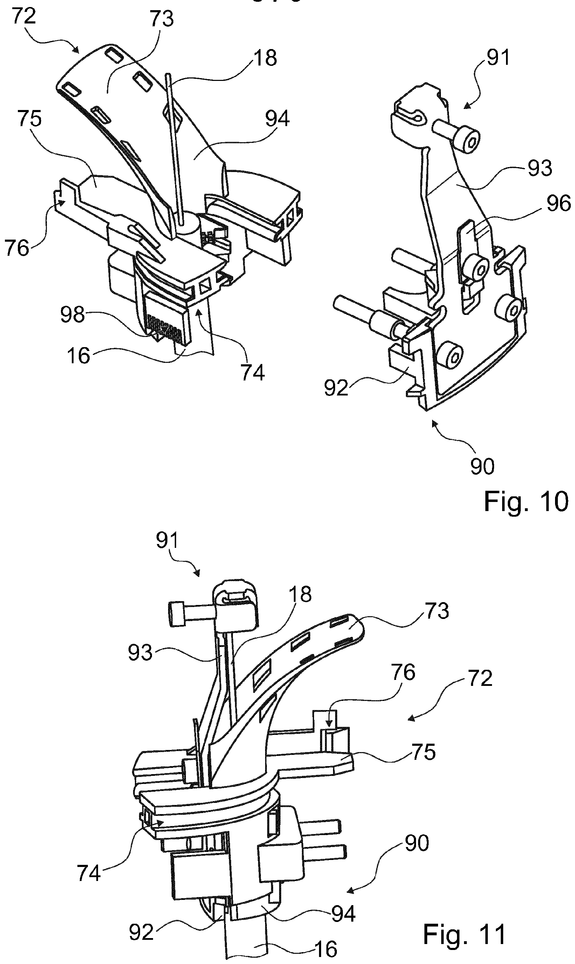

Die Kabelfixiermodule 72, 72a, 72b weisen jeweils als Nuten ausgebildete Führungsmittel 74, 74a, 74b auf, die dazu vorgesehen sind, bei einer Aufnahme in der Lagerungseinheit 80 an den Führungsmitteln 84 geführt zu werden (Figuren 10-13). Die Kabelfixiermodule 72, 72a, 72b weisen jeweils eine Führungsplatte 75, 75a, 75b auf, die dazu vorgesehen ist, zwischen den Führungsmitteln 82 der Lagerungseinheit 80 geführt zu werden. Die Kabelfixiermodule 72, 72a, 72b weisen jeweils einen Rastmechanismus 76, 76a, 76b auf, der dazu vorgesehen ist, eines der Führungsmittel 82 der Lagerungseinheit 80 zu umrasten. Der Rastmechanismus 76, 76a, 76b und die Führungsplatte 75, 75a, 75b umschließen einen im Wesentlichen geschlossenen länglichen Führungskanal 86, der jeweils ein Führungsmittel 82 aufnimmt und führt (Figur 9). Durch die Führung des Führungsmittels 82 in dem Führungskanal 86 kann das jeweilige Kabelfixiermodul 72, 72a, 72b um ca. 2 cm verschoben werden ohne fixierte Kabel zu lösen, was ausreicht, um das entsprechende Dichtmodul 32, 32a, beispielsweise aufgrund Alterung oder Defekt, gegen ein gleichartiges auszuwechseln.

Die unterschiedlichen Kabelfixiermodule 72, 72a, 72b sind bezüglich ihrer Befestigung an der Lagerungseinheit 80 gegeneinander austauschbar.

Das erste Kabelfixiermodul 72 weist eine erste Klemmeinheit 90 auf, die dazu vorgesehen ist, ein gesamtes Glasfaserkabel 16 zu klemmen (Figuren 10, 11). Die Klemmeinheit 90 ist von zwei Klemmbacken 92, 94 gebildet, zwischen denen das Glasfaserkabel 16 zu einer Fixierung angeordnet wird, wobei die Klemmbacken 92, 94 mittels Schraubbefestigung das Glasfaserkabel 16 klemmen. Die Klemmbacken 92, 94 weisen eine Schuppung auf, um einen verbesserten Halt des Glasfaserkabels 16 zu erreichen. Die erste Klemmeinheit 90 weist weiterhin eine Spannkraftkontrolliereinheit 98 auf, die dazu vorgesehen ist, einem Bediener eine Einstellung einer Klemmkraft an der ersten Klemmeinheit 90, mit der das Glasfaserkabel 16 fixiert wird, erleichtert. Die Spannkraftkontrolliereinheit 98 ist von einer Kammskala, insbesondere von einer Millimeterkammskala, gebildet. Die Spannkraftkontrolliereinheit 98 ist an der zweiten Klemmbacke 94 ausgebildet. Die Spannkraftkontrolliereinheit 98 gibt einen Abstand zwischen den beiden Klemmbacken 92, 94 wieder. Die erste Klemmbacke 92 gibt in Abhängigkeit von einer Position eine unterschiedliche Anzahl an Spalten der Kammskala frei. Bei einer Kabelmontage kann ein Bediener die Klemmbacken 92, 94 soweit zusammenführen, dass ein eingelegtes Kabel gerade geklemmt wird. Der Bediener kann nun eine Position der Klemmbacken 92,94 zueinander ablesen. Durch Vergleich abgelesener Positionen bei einem weiteren Festklemmen, also Aufeinanderzubewegen der Klemmbacken 92, 94, kann der Bediener auf eine aufgebrachte Spannkraft schließen, bzw. direkt mit vorgeschlagenen Klemmstärken vergleichen. Alternativ ist eine Ausgestaltung der Spannkraftkontrolliereinheit mit zumindest einem Federelement denkbar, das wiederrum einen Anzeigemechanismus antreibt.

Das erste Kabelfixiermodul 72 weist eine zweite Klemmeinheit 91 auf, die dazu vorgesehen ist, ein Zentralelement 18 des aufgedröselten Glasfaserkabels 16 festzuklemmen, wobei um das Zentralelement 18 im Normalfall die Glasfaserleitungen des Glasfaserkabels 16 angeordnet sind. Das Zentralelement 18 dient hierbei einer Stabilisierung und einer Sicherstellung eines minimalen Biegeradiuses. Die separate Fixierung des Zentralelements 18 erhöht eine Sicherheit und sorgt für eine hohe Zug- und/oder Druckentlastung. Die zweite Klemmeinheit 91 weist eine metallische Halterung 93 auf, an der das Zentralelement 18 mittels Schraubklemmung fixiert wird, wodurch insbesondere eine Zug- und Druckentlastung erreicht werden kann. Weiterhin kann eine Erdung eines metallischen Zentralelements 18 erreicht werden. Das Führungselement 73 ist an der zweiten Klemmbacke 94 angeordnet. Die metallische Halterung 93 und somit die zweite Klemmeinheit 91 sind an der ersten Klemmbacke 92 angeordnet. An die metallische Halterung 93 ist ein Klemmkontakt 96 angeordnet, der zu einer Montage einer elektrischen Schirmleitung vorgesehen ist.

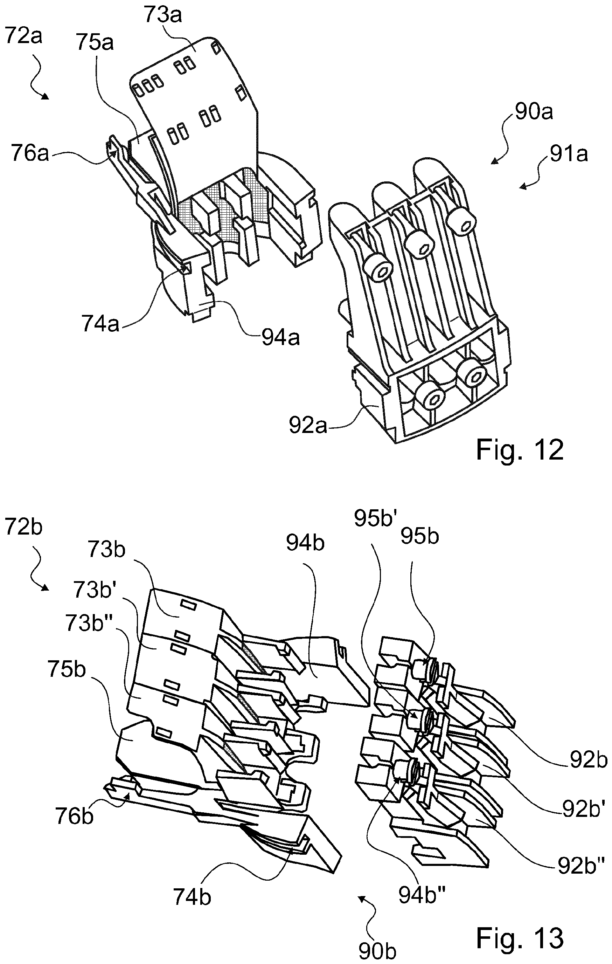

Das zweite Kabelfixiermodul 72a weist eine erste Klemmeinheit 90a auf, die dazu vorgesehen ist, drei gesamte Kabel gemeinsam zu klemmen (Figur 12). Die erste Klemmeinheit 90a ist von zwei Klemmbacken 92a, 94a gebildet, zwischen denen die Kabel in Führungsbereichen zu einer Fixierung angeordnet werden, wobei die Klemmbacken 92a, 94a mittels Schraubbefestigung die Kabel klemmen. Die Klemmbacken 92a, 94a weisen eine Schuppung auf, um einen verbesserten Halt des Kabels zu erreichen. Das zweite Kabelfixiermodul 72a weist eine zweite Klemmeinheit 91a auf, die dazu vorgesehen ist, ein Zentralelement des aufgedröselten Kabels festzuklemmen. Die zweite Klemmeinheit 91a ist an der ersten Klemmbacke 92a ausgebildet und ist zu einer Schraubklemmung vorgesehen. Das Führungselement 73a ist an der zweiten Klemmbacke 94a angeordnet.

Das dritte Kabelfixiermodul 72b weist drei erste Klemmeinheiten 90b, 90b', 90b" auf, die jeweils dazu vorgesehen sind, ein Einblasröhrchen zur nachträglichen Einbringung einer Glasfaserleitung zu klemmen (Figur 13). Die ersten Klemmeinheiten 90b, 90b', 90b" sind von zwei Klemmbacken 92b, 92b', 92b", 94b gebildet, zwischen denen die Einblasröhrchen in Führungsbereichen zu einer Fixierung angeordnet werden, wobei die ersten Klemmbacken 92b, 92b', 92b" jeweils einzeln mittels Rastverbindung an der zweiten Klemmbacke 94b befestigt werden, um die Einblasröhrchen zu klemmen. Die Klemmbacken 92b, 92b', 92b", 94b weisen eine Schuppung auf, um einen verbesserten Halt des Kabels zu erreichen. Das dritte Kabelfixiermodul 72b weist drei Fixiereinheiten 95b, 95b', 95b" auf, die jeweils dazu vorgesehen sind, eine Ummantelungs- und/oder Schutzelement einer durch das Einblasröhrchen eingeblasenen Glasfaserleitung durch Aufwickeln und Festklemmen aufzunehmen und zu befestigen. Das Führungselement 73b ist an der zweiten Klemmbacke 94b angeordnet.

Die Lagerungseinheit 80, die Druckbeaufschlagungseinheit 50 und die Ummantelungseinheit 20 sind vorzugsweise aus metallischen Werkstoffen gefertigt. Die übrigen Bestanteile sind vorzugsweise im Wesentlichen von Kunststoffen gebildet.

Durch die beschriebene Ausgestaltung ist weiterhin ein System zur Zusammenstellung eines erfindungsgemäßen Kabelkontaktierungswitterungsschutzes 10 offenbart, das unterschiedliche Dichtmodule 32, 32a, die dazu vorgesehen sind, zu einer Kabeldurchführungsdichteinheit 30 des Kabelkontaktierungswitterungsschutzes 10 kombiniert zu werden, und das unterschiedliche Kabelfixiermodule 72, 72a, 72b aufweist, die dazu vorgesehen sind, zu einer Kabelfixiereinheit 70 des Kabelkontaktierungswitterungsschutzes 10 zusammengesetzt zu werden. Jedes der Kabelfixiermodule 72, 72a, 72b weist dabei ein funktionell zugeordnetes Dichtmodul 32, 32a auf. Beispielsweise kann ein derartiges System als Baukasten ausgebildet sein, wobei ein Monteur die ihm für die aktuelle Kabelkonfiguration geeignet erscheinenden Dichtmodule 32, 32a und Kabelfixiermodule 72, 72a, 72b auswählt.

## Patentansprüche

1. Kabelkontaktierungswitterungsschutz zur Aufnahme von Kabelkontaktierungsstellen, insbesondere von Glasfaserkabelkontaktierungsstellen, mit zumindest einer Kabeldurchführungsdichteinheit (30), die zumindest zwei separate, unabhängig voneinander austauschbare Dichtmodule (32, 32a) mit jeweils zumindest einem Dichtelement (34, 34a) und jeweils zumindest einem Schalungselement (33, 35, 33a, 35a), das an dem jeweiligen Dichtelement (34, 34a) anliegt, aufweist, die jeweils dazu vorgesehen sind, in zumindest einem Anwendungszustand zumindest einen länglichen Körper wenigstens abschnittsweise komplett in Umfangsrichtung zu umschließen, wobei sowohl das zumindest eine Dichtelement (34, 34a) als auch das zumindest eine Schalungselement (33, 35, 33a, 35a) zumindest ein Scharnier (38, 38a, 39a, 39a') aufweisen.

2. Kabelkontaktierungswitterungsschutz nach Anspruch 1, **gekennzeichnet durch** eine Druckbeaufschlagungseinheit (50), die dazu vorgesehen ist, die Dichtmodule (32, 32a) in zumindest einer Richtung mit einem Druck zu beaufschlagen.

3. Kabelkontaktierungswitterungsschutz nach Anspruch 2, **dadurch gekennzeichnet, dass** die Druckbeaufschlagungseinheit (50) für zumindest einen Großteil der Dichtmodule (32, 32a) der Kabeldurchführungsdichteinheit (30) jeweils ein separates Druckbeaufschlagungsmodul (52) aufweist.

4. Kabelkontaktierungswitterungsschutz nach Anspruch 3, **dadurch gekennzeichnet, dass** die Druckbeaufschlagungseinheit (50) zumindest eine Druckeinstelleinheit (51) aufweist, die dazu vorgesehen ist, für zumindest einen Großteil der Druckbeaufschlagungsmodule (52) gleichzeitig einen Druck einzustellen.

5. Kabelkontaktierungswitterungsschutz nach einem der vorhergehenden Ansprüche, **dadurch gekennzeichnet, dass** zumindest zwei der Dichtmodule (32, 32a) unterschiedlich ausgestaltet sind.

6. Kabelkontaktierungswitterungsschutz nach einem der vorhergehenden Ansprüche, **dadurch gekennzeichnet, dass** zumindest eines der Dichtmodule (32, 32a) genau ein Dichtelement (34, 34a) aufweist.

7. Kabelkontaktierungswitterungsschutz nach Anspruch 6, **dadurch gekennzeichnet, dass** zumindest eines der Dichtmodule (32, 32a) dazu vorgesehen ist, zu einer Kabelmontage aufgeklappt zu werden.

8. Kabelkontaktierungswitterungsschutz zumindest nach Anspruch 6, **dadurch gekennzeichnet, dass** das Dichtelement (34, 34a) zumindest im Wesentlichen entlang einer Umfangsrichtung geschlitzt ist.

9. Kabelkontaktierungswitterungsschutz nach einem der vorhergehenden Ansprüche, **dadurch gekennzeichnet, dass** Dichtelemente (34, 34a) der Dichtmodule (32, 32a) als Gelelemente ausgebildet sind.

10. Kabelkontaktierungswitterungsschutz nach einem der vorhergehenden Ansprüche, **dadurch gekennzeichnet, dass** zumindest eines der Dichtmodule (32, 32a) zumindest im Wesentlichen als Kreisringsektor ausgebildet ist.

11. Kabelkontaktierungswitterungsschutz nach einem der vorhergehenden Ansprüche, **dadurch gekennzeichnet, dass** die Dichtmodule (32, 32a) jeweils Rastmittel (42) zu einer Rastmontage aufweisen.

## Claims

1. Cable contact weather protection device for receiving cable contact points, in particular fibre optic cable contact points,
with at least one cable pass-through sealing unit (30) comprising at least two separate sealing modules (32, 32a), which are exchangeable independently from each other and each of which has at least one sealing element (34, 34a) and has at least one sheathing element (33, 35, 33a, 35a) that is adjacent to the respective sealing element (34, 34a),
each of the sealing modules (32, 32a) being configured, in at least one application state, to at least section-wise completely encompass at least one elongate body in a circumferential direction, wherein both the at least one sealing element (34, 34a) and the at least one sheathing element (33, 35, 33a, 35a) comprise at least one hinge (38, 38a, 39a, 39a').

2. Cable contact weather protection device according to claim 1,
**characterised by** a pressurisation unit (50) configured to subject the sealing modules (32, 32a) to a pressure in at least one direction.

3. Cable contact weather protection device according to claim 2,
**characterised in that** the pressurisation unit (50) comprises respectively one separate pressurisation module (52) for at least a large portion of the sealing modules (32, 32a) of the cable pass-through sealing unit (30).

4. Cable contact weather protection device according to claim 3,
**characterised in that** the pressurisation unit (50) comprises at least one pressure adjusting unit (51), which is configured to simultaneously adjust a pressure for at least a large portion of the pressurisation modules (52).

5. Cable contact weather protection device according to one of the preceding claims, **characterised in that** at least two of the sealing modules (32, 32a) are implemented differently.

6. Cable contact weather protection device according to one of the preceding claims, **characterised in that** at least one of the sealing modules (32, 32a) comprises precisely one sealing element (34, 34a).

7. Cable contact weather protection device according to claim 6,
**characterised in that** at least one of the sealing modules (32, 32a) is configured to be folded open for a cable assembly.

8. Cable contact weather protection device at least according to claim 6, **characterised in that** the sealing element (34, 34a) is slitted at least substantially along a circumferential direction.

9. Cable contact weather protection device according to one of the preceding claims, **characterised in that** sealing elements (34, 34a) of the sealing modules (32, 32a) are implemented as gel elements.

10. Cable contact weather protection device according to one of the preceding claims, **characterised in that** at least one of the sealing modules (32, 32a) is implemented at least substantially as an annulus sector.

11. Cable contact weather protection device according to one of the preceding claims, **characterised in that** the sealing modules (32, 32a) each have latch elements (42) for a latch assembly.

## Revendications

1. Protection contre les intempéries d'une mise en contact de câble pour recevoir des points de mise en contact de câble, en particulier des points de mise en contact de câble en fibre de verre,
avec au moins une unité passage-scellage de câble (30) comprenant au moins deux modules d'étanchéité (32, 32a) séparés, qui sont échangeables indépendamment l'un de l'autre et chacun desquels comprend au moins un élément d'étanchéité (34, 34a) et au moins un élément de revêtement (33, 35, 33a, 35a) jouxtant l'élément d'étanchéité (34, 34a) respectif,
les modules d'étanchéité (32, 32a) étant respectivement configurés, dans au moins un état d'usage, à entourer au moins un corps allongé complétement en direction circonférentielle au moins par sections,
où l'au moins un élément d'étanchéité (34, 34a) et l'au moins un élément de revêtement (33, 35, 33a, 35a) comportent au moins une charnière (38, 38a, 39a, 39a').

2. Protection contre les intempéries d'une mise en contact de câble selon la revendication 1,
**caractérisée par** une unité de pressurisation (50) configurée à exercer une pression sur les modules d'étanchéité (32, 32a) dans au moins une direction.

3. Protection contre les intempéries d'une mise en contact de câble selon la revendication 2,
**caractérisée en ce que** l'unité de pressurisation (50) comprend respectivement un module de pressurisation (52) séparé pour au moins une large portion des modules d'étanchéité (32, 32a) de l'unité passage-scellage de câble (30).

4. Protection contre les intempéries d'une mise en contact de câble selon la revendication 3,
**caractérisée en ce que** l'unité de pressurisation (50) comprend au moins une unité de réglage de pression (51) configurée à régler une pression pour au moins une large portion des modules de pressurisation (52) simultanément.

5. Protection contre les intempéries d'une mise en contact de câble selon l'une quelconque des revendications précédentes,
**caractérisée en ce qu'**au moins deux des modules d'étanchéité (32, 32a) sont implémentés différemment.

6. Protection contre les intempéries d'une mise en contact de câble selon l'une quelconque des revendications précédentes,
**caractérisée en ce qu'au** moins un des modules d'étanchéité (32, 32a) comprend précisément un élément d'étanchéité (34, 34a).

7. Protection contre les intempéries d'une mise en contact de câble selon la revendication 6,
**caractérisée en ce qu'**au moins un des modules d'étanchéité (32, 32a) est configuré à être replié pour un montage de câble.

8. Protection contre les intempéries d'une mise en contact de câble au moins selon la revendication 6,
**caractérisée en ce que** l'élément d'étanchéité (34, 34a) est fendu au moins sensiblement le long d'une direction circonférentielle.

9. Protection contre les intempéries d'une mise en contact de câble selon l'une quelconque des revendications précédentes,
**caractérisée en ce que** des éléments d'étanchéité (34, 34a) des modules d'étanchéité (32, 32a) sont réalisés comme éléments de gel.

10. Protection contre les intempéries d'une mise en contact de câble selon l'une quelconque des revendications précédentes,
**caractérisée en ce qu'au** moins un des modules d'étanchéité (32, 32a) est réalisé au moins sensiblement comme secteur d'anneau de cercle.

11. Protection contre les intempéries d'une mise en contact de câble selon l'une quelconque des revendications précédentes,
**caractérisée en ce que** les modules d'étanchéité (32, 32a) respectivement comprennent des moyens d'encliquetage (42) pour un montage à encliquetage.
